# EUROPÄISCHE PATENTSCHRIFT

(11) **EP 0 986 790 B1**
(45) Veröffentlichungstag und Bekanntmachung des Hinweises auf die Patenterteilung: **02.05.2003**
(21) Anmeldenummer: 98930780.6
(22) Anmeldetag: 02.06.1998
(51) Int. Cl.: G06F 17/30

(54) **VERFAHREN ZUM DARSTELLEN VON UND NAVIGIEREN IN GRÖSSEREN, GRAFIK-ELEMENTE ENTHALTENDEN DATEIEN**
DISPLAY AND NAVIGATION METHOD FOR LARGE DATA FILES CONTAINING GRAPHIC ELEMENTS
PROCEDE DE REPRESENTATION DE PLUS NOMBREUSES DONNEES RENFERMANT DES ELEMENTS GRAPHIQUES ET DE NAVIGATION DANS DE TELLES DONNEES

(30) Priorität: 02.06.1997 DE 19723102
(43) Veröffentlichungstag der Anmeldung: 22.03.2000
(73) Patentinhaber: Media Design Gesellschaft für Multimedia und online-publishing mbH, 07549 Gera (DE)
(72) Erfinder: KRAFT, Steffen, 07549 Gera (DE)
(74) Vertreter: Kruspig, Volkmar, Dipl.-Ing.
(86) Internationale Anmeldenummer: EP9803280
(87) Internationale Veröffentlichungsnummer: WO98055939

(56) Entgegenhaltungen:
- EP-A- 0 543 414
- EP-A- 0 675 452
- US-A- 5 032 989

## Beschreibung

Die Erfindung betrifft ein Verfahren zum Darstellen von und Navigieren in größeren, Grafikelemente enthaltenden Dateien, wobei die Darstellung oder Präsentation der jeweiligen Dateiausschnitte auf einem Monitor erfolgt.

Es ist bekannt, größere grafische Objekte, so z.B. Stadtpläne, Unterlagen zum Layout von integrierten Schaltkreisen oder Leiterplatten oder dergleichen in ihrer sehr detaillierten Darstellung aufzubereiten und einem Nutzer on- oder offline zur Verfügung zu stellen. Das Problem hierbei ist der Umgang mit den außerordentlich großen Dateien, insbesondere wenn eine hohe Detailtreue und Aussagegenauigkeit der dazustellenden grafischen Objekte gefordert ist.

Bei der Nutzung externer Dateien, die über Kommunikationsverbindungen z.B. Internet online abgefragt werden können, besteht das Problem der begrenzten Übertragungsbandbreite zur Verfügung stehender Netze, woraus sich bereits mit Blick auf die Größe der zu übertragenden Dateien ein unzureichendes Handling und eingeschränkte Benutzungsmöglichkeiten ergeben.

Beispielsweise ist es bekannt, Stadtpläne oder Landkarten im Rahmen von sogenannten Web-Seiten im Internet zur Verfügung zu stellen. Das auf einem Benutzermonitor sichtbare Kartenfenster zeigt einen aus einer Grafik bestehenden Kartenausschnitt, wobei das Wandern entlang der gesamten möglichen Darstellung durch ein sogenanntes Scrollen in den Karten möglich ist. Da hierbei in der Regel nicht unerhebliche Datenmengen nachgeladen werden müssen, vergeht beim Scrollen eine erhebliche Zeit, so daß der Nutzeffekt unbefriedigend ist. Darüber hinaus wird beim Vorliegen eines neuen Kartenausschnittes am Ende des Scrollvorganges kein Orientierungspunkt hinsichtlich des vorherigen Kartenausschnittes angegeben, so daß ein Navigieren kaum oder nur erschwert möglich ist.

Ein weiteres Problem besteht darin, daß bei herkömmlich gestalteten Menu-Layouts sich notwendige Nagivationselemente außerhalb des gezeigten jeweiligen Kartenausschnittes befinden, so daß der eigentliche Platz für die Darstellung um diese Fläche reduziert ist. Darüber hinaus muß für die Darstellung der Navigationselemente bei bekannten Lösungen zusätzliche Grafik geladen werden.

Letztendlich hat es sich gezeigt, daß bei der bisherigen Bereitstellung von Dateien, enthaltend detaillierte Darstellungen flächiger Gebilde mögliche Komprimierungen und eine Farbreduzierung zwar zu einer Beschleunigung der Nachladeschritte führt, jedoch andererseits Abstriche in der Informationstiefe gegeben sind, die gerade bei Stadtplänen zu der Schwierigkeit führen, daß Beschriftungen von Straßenzügen oder andere Detailangaben nicht mehr erkennbar sind.

Aus dem oben Genannten resultierend liegen also online-Stadtpläne oder dergleichen insgesamt in Qualität und Informationsgehalt hinter dem entsprechenden Printmedienprodukt zurück, so daß die an sich unstrittigen Vorteile digitaler Varianten, wie Interaktivität und verschiedene Recherchemöglichkeiten, nicht voll oder nicht überzeugend genutzt werden können.

Aus der EP-A-0 543 414 ist ein Verfahren zu einer Beschleunigung der Darstellung von Bilddaten einer Datei durch Aufteilung der Darstellungsfläche des Monitors in Rasterfelder unter Assoziierung eines jeden Rasterfelds mit einem Datenspeicher bekannt. Ebenso zeigt dieses Dokument, daß Bilder einer Bildsequenz in benachbarte Rasterfelder geladen werden und daß die geladenen Bilder durch vom Anwender ausgewählte Bildverarbeitungsfunktionen, wie z.B. Zoom, unabhängig voneinander verändert werden können.

Die Methode zum Laden und zur Darstellung von Bilddaten eines Mikrofilms, wobei die Darstellungsfläche des Monitors in Rasterfelder aufgeteilt sein kann, gemäß EP-A-0 675 452, ermöglicht es, daß eines der Rasterfelder zur Darstellung von Nicht-Bilddaten nutzbar ist. Über eine bekannte Browsing-Funktion besteht die Möglichkeit, in der Bilddatei zu blättern und es sind die Bilder auf dem Rasterfeld darstellbar, so daß eine Scrolling-Funktion realisierbar ist. Benutzerwählbare Bildverarbeitungsfunktionen, wie z.B. Zoom oder Rotate, werden ebenfalls zur Verfügung gestellt. Die Bilddaten sind komprimiert und skalierbar.

Letztendlich ist aus dem US-Patent 5,032,989 ein Verfahren zur Darstelllung und Bestimmung von Daten über Grundbesitz und Liegenschaften bekannt, wobei dort insbesondere zur Darstellung von Bilddaten einer Datei auf einer Darstellungsfläche die Möglichkeit besteht, eine Region auszuwählen. Die verwendete Datei ist vorzugsweise eine Karte. Zur Auswahl einer Region hat der Benutzer die Möglichkeit, mittels eingebbaren Navigationsrichtungen ein kreis- oder rechteckförmiges Zentrums-Rasterfeld in vier verschiedene Richtungen zu verschieben. Nachfolgend können Zoom-Operationen erfolgen. Die Bilddaten werden entsprechend der Navigationsrichtung aktualisiert, allerdings erfolgt dort kein Nachladen der Bilddateien pro Rasterfeld. Die Aufteilung der Darstellungsfläche ist zwar mit Rasterfeldern beschrieben, wobei zumindest ein Zentrums-Rasterfeld und ein dieses umgebendes Randrasterfeld vorliegt allerdings werden diesen Rasterfeldern Keine Navigationsrichtungen zugewiesen.

Es ist daher Aufgabe der Erfindung, ein Verfahren zum Darstellen von und Navigieren in größeren, Graphikelemente enthaltenden Dateien anzugeben, wobei die Darstellung oder Präsentation auf einen Monitor erfolgt, und zwar in der Weise, daß für ein Orientieren und Navigieren innerhalb der sichtbaren Datei bzw. des auf dem Monitor angezeigten Ausschnittes Orientierungspunkte vorhanden sind oder erhalten bleiben und das Nachladen von Dateien in einer solchen Weise erfolgt, daß die Nutzungsmöglichkeiten und die Suchgeschwindigkeit nicht in einer für den Nutzer nachteiligen Weise beeinträchtigt werden. Darüber hinaus ist es Aufgabe der Erfindung, ein Verfahren zur Kompression von Dateien, enthaltend Text, Graphik- oder Bildinformationen anzugeben, das insbesondere zum verbesserten Darstellen von und Navigieren in größeren Dateien geeignet ist, und das ungeachtet des Kompressionsgrades ein ausreichendes Antialiasing ermöglicht.

Die Lösung der Aufgabe der Erfindung erfolgt mit einem Verfahren gemäß Definition nach Patentanspruch 1.

Der verfahrensseitige Grundgedanke der Erfindung besteht darin, die bei einer Darstellung einschließlich Navigieren notwendigen nachzuziehenden oder nachzuladenden Dateien in ihrer Anzahl zu reduzieren und durch Vorgabe von Rasterfeldern, die kleineren Dateien entsprechen, den Ablauf des Verfahrens zum Darstellen von umfangreichen Dateien flüssiger zu gestalten.

Durch das erfindungsgemäße Verfahren wird das Anzeigen und Darstellen der Grafikelemente enthaltenden Dateien für den Anwender objektiv und subjektiv beschleunigt, wobei sich durch die erfindungsgemäßen Merkmale der Vorteil einer selbsterklärenden, einfach zu handhabenden Navigation ergibt.

Durch das ausgestaltende Kompressionsverfahren bleiben Detailinformationen, wie sie insbesondere für Stadtpläne, Landkarten oder dergleichen notwendig sind, erhalten, wobei andererseits die gesamte zu transferierende Datenmenge im Onlinebetrieb reduziert wird, indem bei Grafik- oder Bildinformationen auf eine reduzierte Farbpalette abgestellt wird.

Bei einer bevorzugten Ausführungsform der Erfindung wird bei dem Verfahren zum Darstellen von und Navigieren in größeren Dateien, die Grafikelemente enthalten, ein visuelles und ansteuerungsseitiges Aufteilen der Darstellungsflächen des Monitors und damit der zu handhabenden Dateien in ein vorzugsweise kartesisches Raster vorgenommen.
Dieses kartesische Raster enthält ein Zentrum-Rasterfeld sowie dieses umgebende Randrasterfelder.

Jedem der Randrasterfelder wird eine grafisch dargestellte, visuell erkennbare Navigationsrichtung zugefügt und es sind Nachladebefehle vorgesehen. Die entsprechenden Darstellungselemente für die symbolartige Angabe der Navigationsrichtungen sowie die Nachladebefehle können zweckmäßigerweise Bestandteil der jeweiligen Einzeldatei sein. Erfindungsgemäß wird beim Aktivieren eines der Randrasterfelder der dieses Feld repräsentierende Dateiinhalt zum Zentrums-Rasterfeld verlagert oder verschoben und es wird ein bisher auf dem Monitor nicht dargestelltes am Randrasterfeld angrenzender Dateiinhalt aus der Hauptdatei nachgeladen, wobei diese nachgeladene Datei dann selbst zu einem neuen Randrasterfeld wird. Gleichzeitig bzw. sukzessive werden die am bisherigen Zentrums-Rasterfeld angrenzenden übrigen, nicht aktivierten Randrasterfeldes entgegen der gewählten Navigationsrichtung bewegt oder ggfs. aus der Monitordarstellung herausgeführt.

Während des kurz beschriebenen Navigierens mittels der Navigationssymbole enthaltenden Randrasterfelder und der Bewegung der vorhandenen Dateien für das Zentrums-Rasterfeld und den nicht navigationsseitig aktivierten Randrasterfeldern erfolgt das Nachladen angrenzender Dateiinhalte, so daß der Darstellungsvorgang beschleunigbar ist.
Da sich die nachzuziehenden Dateien auf das oder die wenigen Dateiinhalte reduzieren, die dem aktivierten Randrasterfeld benachbart sind, reduziert sich die z.B. online aufzurufende Datenmenge.

In einer Ausführungsform der Erfindung besteht die Möglichkeit, das Zentrums-Rasterfeld mit einer Zoomfunktion zu belegen. Da das Zentrums-Rasterfeld selbst einen Ausschnitt der in ein kartesisches Raster eingeteilten Darstellungsfläche beinhaltet, ist die entsprechende Datei, die darstellungsseitig einem Zooming unterzogen wird, kleiner als bei bekannten Lösungen, so daß sich auch hier Vorteile für die Nachladezyklen ergeben.

Aus dem Obigen schlußfolgernd ergibt sich eine bevorzugte Verwendung des erfindungsgemäßen Verfahrens für die Darstellung von Karten, Stadtplänen, Wegweisern und dergleichen mit besonders vorteilhafter Navigationsmöglichkeit, wobei ohne Nachteile für den Anwender auf einen räumlich entfernten Datenbestand bzw. eine Hauptdatei online zurückgegriffen werden kann.

Eine weitere Verbesserung des erläuterten Darstellungsverfahrens ergibt sich, wenn auf die Möglichkeit der Kompression von Dateien gemäß dem nachstehend beschrieben Verfahren zurückgegriffen wird.

Bei diesem Kompressionsverfahren wird von Dateien ausgegangen, welche Text und Grafik- oder Bildinformationen enthalten, wobei die Darstellung der komprimierten Dateien oder Dateiausschnitte auf einem Monitor erfolgen soll.
Zur Kompression wird zunächst in an sich bekannter Weise eine Erstellung von vektorisiertem Dateiausgangsmaterial getrennt in entsprechende Ebenen nach Text und Grafik- oder Bildinformationen vorgenommen. Hierbei wird auf eine maximal 4-Bit-Farbtiefe aufweisende Anzahl von Grundfarben zurückgegriffen.

Im Anschluß werden die vektorisierten Dateien einer getrennten Farbreduktion für Text einerseits und Grafik- oder Bildinformationen andererseits unterzogen, wobei für Texte auf mindestens fünf Graustufen zurückgegriffen wird. Die verbleibende Farbtiefe kann dann für die Grafik- oder Bildinformationen genutzt werden.

Die so zur Verfügung stehenden minimierten Dateien werden dann zusammengefügt und in ein entsprechendes Pixelformat überführt.

Bei der Vektorisierung werden zweckmäßigerweise 16 Grundfarben berücksichtigt, wobei 5 bis 6 Graustufen für die Textdateien zur Verfügung stehen und 10 bis 11 Farben Verwendung für die Grafik- und Bildinformationen finden.

In besonders vorteilhafter Weise können die zusammengefügten farbreduzierten Dateien bereits den erfindungsgemäßen Rasterfeldern entsprechen, wobei Unterdateien im gegebenen Rasterformat erzeugbar sind.

Die Erfindung soll nachstehend anhand von Ausführungsbeispielen sowie unter Zuhilfenahme von Figuren näher erläutert werden.

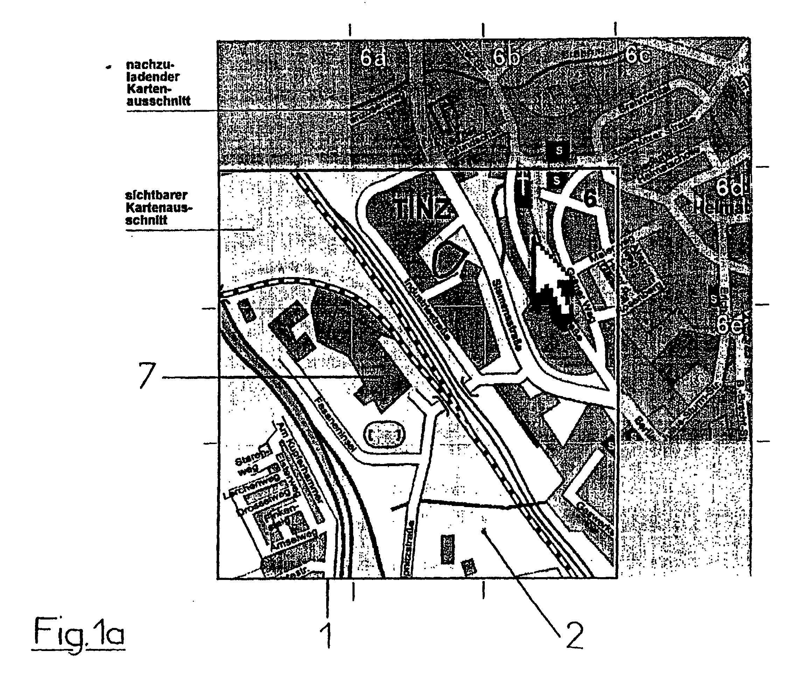

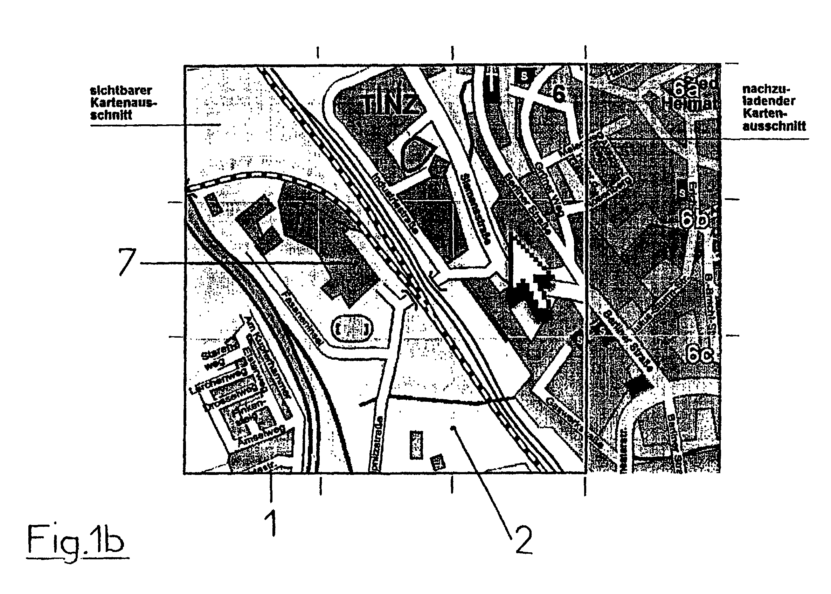

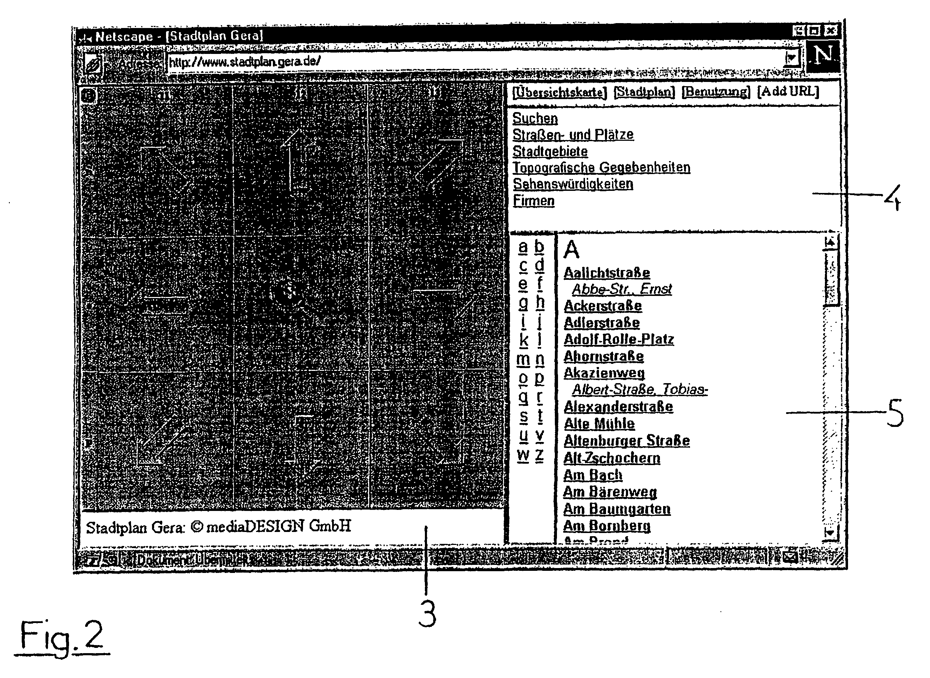

Die Figuren 1a und 1b zeigen hierbei eine prinzipielle Monitordarstellung mit einem 9-Feld-Raster. Figur 2 stellt Navigationssymbole in den Randrasterfeldern dar.

Wie aus den Figuren 1a und 1b ersichtlich, ist die Monitor-Darstellungsfläche 1 in ein Raster, beim gezeigten Beispiel ein kartesisches Raster von neun Feldern, aufgeteilt. Das netzförmige Raster 2 entspricht dem überwiegenden Inhalt der Bildschirmdarstellung, wobei jedoch das Einblenden weiterer darzustellender Bausteine zu Werbezwecken in Form eines Werbefensters 3, für Statusinformationen 4 oder für durchzuführende Recherchen 5 z.B. zur Aufnahme eines alphabetisch geordneten Straßenverzeichnisses zur Verfügung steht (s. Figur 2).

Die äußeren Quadrate oder Randrasterfelder 6 dienen zur Navigation in die vier Haupt- und vier Nebenhimmelsrichtungen. Ein Zentrums-Rasterfeld 7 befindet sich in der Mitte der Rasteranordnung. Durch Anklicken (Pfeildarstellung) eines der Randrasterfelder 6 z.B. mit einer PC-Maus wird dieses äußere Randrasterfeld zum Zentrum der Karte, d.h. zum Zentrums-Rasterfeld 7. Dadurch nachrückende Kartenquadrate bzw. Randrasterfelder z.B. beim Anklicken rechts oben (Figur 1a) werden nachgeladen und dargestellt, so daß insgesamt die Kartenfläche ausgefüllt ist. In inaktiven Phasen werden weitere Kartenquadrate insbesondere außerhalb der Randrasterfelder liegend nachgeladen, die dann beim erneuten Aktivieren eines der Randrasterfelder 6 bereits vorliegen und somit den Darstellungsvorgang insgesamt beschleunigen.

Wie mit dem Symbol "Lupe" im Zentrums-Rasterfeld 7 (Figur 2) angedeutet, kann das mittlere Quadrat mit einer Zweitfunktion z.B. Zoom-In oder Zoom-Out belegt werden.

Wie mit dem Randrasterfeld 6 und den umgebenden Feldern 6a-e dargestellt, werden beim Aktivieren des Randrasterfeldes 6 der gewünschten Navigationsrichtung entsprechend intern quasi die Felder 6a-e nachgeladen, wobei Feld 6c das zum Zentrum 7 gewordene Feld 6 ersetzt. Dadurch, daß nur ausgewählte quasi neue Randrasterfelder, die einer Teilmenge der ansonsten darzustellenden Inhalte entsprechen, je nach der gewünschten Navigationsrichtung nachzuladen sind, verkürzt sich die für eine schnelle grafische Darstellung bzw. für einen schnellen Bildaufbau erforderliche zu transferierende Datenmenge. Darüber hinaus ist durch die dargestellten Symbole, die Bestandteil der jeweiligen Dateien sind, eine leichte Bedienung am Bildschirm möglich, ohne daß eine ausführliche Einführung oder Unterstützung notwendig wird.
Ein weiterer Vorteil des beschriebenen Ausführungsbeispiels besteht darin, daß durch das Wandern des bisherigen Zentrums-Rasterfeldes 7 entgegen der Navigationsrichtung ein beispielsweise in diesem Zentrums-Rasterfeld enthaltener Orientierungspunkt weiterhin für den Betrachter zur Verfügung steht, so daß sich die Handhabung des Darstellungs- und Präsentationsverfahrens weiter verbessert.

Eine umfassendere Beschleunigung des Nachladeprozesses läßt sich bekanntermaßen durch Reduktion oder Kompression der Datenmenge bzw. der Dateien selbst erreichen.

Hinsichtlich der Erzeugung von hochauflösenden, stark komprimiertem Datenmaterial durch ein erfindungsgemäßes Kompressionsverfahren sei zunächst die generelle Problematik erläutert.

Im Internet stehen derzeit zwei Standard-Grafikformate (GIF, JPEG) zur Verfügung, welche sich hinsichtlich der Dateigröße bzw. möglichen Komprimierung und detailgetreuer Wiedergabe unterschiedlich verhalten. Bei dem für die Entscheidung wichtigen Verhältnis von möglicher Kompressionsrate und Detailtreue zeigt das GIF-Format bei reduzierter Farbpalette und Vermeidung von Dithering die besseren Ergebnisse. Speziell schräg positionierter, dem Straßenverlauf folgender Text, wie bei Kartenbeschriftungen unerläßlich, verliert bei fehlenden Farbabstufungen durch das eingeschränkte oder nicht mehr mögliche Antialiasing erheblich an Lesbarkeit. Demgegenüber benötigen Farbflächen, wie z.B. Straßenzüge und bebaute Flächen zu ihrer sauberen Abgrenzung keinen oder kaum Antialiasing. Bei kontrastreichen Flächengrenzen bewirkt bereits nur eine Zwischenstufe gute Ergebnisse. Bei Verwendung von Pastellfarben, wie z.B. bei Stadtplänen für die Flächen üblich, wird ein derartiger Effekt nicht benötigt. Ebenso soll auf die darzustellenden Flächen kein Dithering angewandt werden, um einen möglichst hohen Kompressionsfaktor zu erreichen. Dies läßt sich sinnvoll nur dann gewährleisten, wenn mit einer fest vorgegebenen Farbpalette gearbeitet wird.

Die oben beschriebenen Erfordernisse lassen sich innerhalb eines gemeinsamen Bearbeitungsschrittes mit üblichen Grafiktools nicht realisieren. Beim erfindungsgemäßen Verfahren wird eine Verwendung von maximal 16 Farben, d.h. einer 4-Bit-Farbtiefe berücksichtigt sowie eine Unterscheidung Antialiasing für Text aber kein Antialiasing für die Flächen vorgenommen. Darüber hinaus wird kein Dithering angewandt.

Es hat sich überraschenderweise herausgestellt, daß für ein annehmbares Antialiasing 5 bis 6 Graustufen (schwarz, weiß und 3 bis 4 Zwischenstufen) genügen. Bei einer angestrebten Palette aus 16 Farben verbleiben daher 10 Farben für die Darstellung von farbigen Flächen und Linien, d.h. von Kartenobjekten.

Grundsätzlich wird das Kartenmaterial erfindungsgemäß mit einem Vektorgrafik-Programm erstellt oder eingelesen. Die Verwendung vektorisierten Kartenmaterials ermöglicht ein späteres komfortables Bearbeiten und eine Aktualisierung des Ausgangsmaterials. Kartenobjekte und Text werden auf getrennten Ebenen abgelegt, um sie separat exportieren und in das Pixelgrafik-Programm importieren zu können. Die mit hoher Farbtiefe eingelesene Objektdatei wird in die 16-Farbpalette ohne Dithering konvertiert. Die den Grafiktext enthaltende Datei wird auf gleichem Wege eingelesen. Bei einer Palettenkonvertierung kommen die zur Verfügung stehenden 5 bis 6 Graustufen zur Anwendung, wodurch ein sauberes Antialiasing möglich ist. Beide Dateien werden in RGB-Farbtiefen konvertiert und übereinander montiert. Die entstehende Grafik besteht insgesamt fast nur aus Farben der 16-Farbpalette und kann deshalb ohne Qualitätsverlust als GIF-Grafik mit der vorgegebenen 16-Farbpalette konvertiert werden. Nach der GIF-Erzeugung können horizontale und vertikale Linien eingetragen werden. Als letzter Schritt werden, wie bereits beschrieben, einzelne Kartenquadrate durch Ausschneiden erzeugt.
Es sei an dieser Stelle darauf aufmerksam gemacht, daß es im Sinne der Erfindung liegt, die einzeln abwickelbaren Verfahrensschritte einem automatischen Prozess zu unterziehen, wobei Einzelschritte zusammenfaßt werden. Es ist weiterhin denkbar, daß die getrennte Umwandlung und anschließene Montage beider Dateien (Text und Bild) nicht mehr notwendig ist, wenn bei einer automatischen Bearbeitung bei der Konvertierung die Textobjekte mit Antialiasing und unter Nutzung der 5 bis 6 Graustufen abgelegt und für die Farbflächen nur 10 Farbeinträge aus der Palette ohne Antialiasing verwendet werden. Der komplexe, automatisch ablaufende Algorithmus kann nach dem Erstellen oder Einlesen des vektorisierten Kartenmaterials getrennt nach Ebenen für Text und sonstige Objekte unter Verwendung der in einer "Vektorpalette" vorliegenden Farben direkt zum Export des Kartenmaterials in ein für den Algorithmus vorgesehenes Dateiformat übergehen. Nach Einlesen des Ausgangsmaterials wird intern eine Konvertierung in ein Pixelformat vorgenommen, wobei für Textelemente Antialiasing mit den 5 bis 6 Graustufen angewendet wird und für sonstige Objekte, die 10 Farbwerte, ohne Antialiasing und Dithering-Effekt Verwendung finden. Die Grafiken werden dann innerhalb der automatisierten Bearbeitung mit Linien versehen und als Quadrate abgelegt.

Bei dem nachstehend beschriebenen Ausführungsbeispiel wird zur Kompression von Dateien zunächst auf das Erstellen von vektorisiertem Dateiausgangsmaterial getrennt nach Ebenen für Text und sonstige Objekte, d.h. Grafik- oder Bildinformationen zurückgegriffen. Hierbei erfolgt eine ausschließliche Verwendung der in einer 16-Farbpalette enthaltenen, nutzbaren Farben. Der Vorteil vektorisierten Dateiausgangsmaterials, z.B. Kartenmaterials, liegt in der Möglichkeit des späteren Bearbeitens und Aktualisierens desselben.
Im Anschluß wird das so vorliegende vektorisierte Kartenmaterial getrennt nach Text- und Objektebenen exportiert, um eine Farbreduzierung vorzunehmen. Demnach erfolgt die Farbreduzierung gemäß Ausführungsbeispiel getrennt für Text und Objektebenen oder Dateien, wobei für Texte auf mindestens fünf Graustufen zurückgegriffen wird und die verbleibende Farbtiefe für die Grafik- oder Bildinformationen, d.h. die Objektebene zur Verfügung steht. Im Anschluß an diesen getrennten Farbreduktionsschritt wird eine Montage oder Multiplikation der getrennten Dateien vorgenommen, wobei sich eine nochmalige Reduzierung der Summenfarbpalette anbietet.

In die so zusammengefügten farbreduzierten Dateien werden dann die oben erwähnten Rasterfeldtrennlinien eingefügt und Unterdateien im Rasterformat erzeugt. Im Vergleich zu bekannten Reduktions- oder Kompressionsverfahren liegt der Vorteil beim vorgestellten Ausführungsbeispiel darin, daß Qualitätsverluste insbesondere bei Text, welcher dem Straßenverlauf folgt, nicht auftreten.

Der Nachteil bekannter Reduktionsverfahren liegt u.a. darin, daß durch alleiniges Ausdünnen einer Pixelmenge oder undifferenziertes Farbreduzieren durch nicht mehr vorhandenes Antialiasing die Lesbarkeit bzw. die Erkennbarkeit von Text-Detaildarstellungen eingeschränkt ist.

Es hat sich überraschenderweise gezeigt, daß für ein annehmbares Antialiasing fünf bis sechs Graustufen, d.h. schwarz, weiß und drei bis vier Zwischenstufen genügen. Bei einer angestrebten Palette aus 16 Farben, d.h. einer 4-Bit-Farbtiefe, verbleiben für die Darstellung von farbigen Flächen und Linien ausreichende zehn Töne.

Alles in allem gestattet das beschriebene Verfahren ein verbessertes Handling bei der Nutzung von grafisch darzustellenden größeren Dateimengen über Online-Verbindungen, so daß hierdurch die Akzeptanz beim Nutzer erhöht wird und sich neue Möglichkeiten für z.B. sich selbst erklärende Stadtinformationssysteme ergeben.

### Bezugszeichenliste

- 1: Darstellungsfläche
- 2: Raster
- 3: Werbefenster
- 4: Statusinformation
- 5: Recherchefenster
- 6a-e: Randrasterfelder
- 7: Zentrums-Rasterfeld
- 6: speziell ausgewähltes Randrasterfeld

## Patentansprüche

1. Verfahren zum Darstellen von und Navigieren in größeren, Grafikelemente enthaltenden Dateien, wobei die Darstellung der jeweiligen Dateiausschnitte auf einem Monitor und ein visuelles und ansteuerseitiges Aufteilen der Darstellungsfläche erfolgt, **gekennzeichnet durch** folgende Schritte:
- Aufteilen der Darstellungsfläche (1) des Monitors in ein vorzugsweise kartesisches Raster (2) mit einem Zentrums-Rasterfeld (7) sowie dieses umgebende Randrasterfelder (6a-e) und Laden der für die Erstdarstellung notwendigen Dateien aus einer Hauptdatei;
- Zuweisen von Navigationsrichtungen und Nachladebefehlen zu jedem der Randrasterfelder (6a-e), so daß beim Aktivieren eines der Randrasterfelder (6a-e) der dieses Feld repräsentierende Dateiinhalt zum Zentrums-Rasterfeld (7) wird sowie der bisher nicht dargestellte, am Randrasterfeld oder an den Randrasterfeldern (6a-e) angrenzende Dateiinhalt aus der Hauptdatei nachladbar ist und weiterhin die am bisherigen Zentrums-Rasterfeld angrenzenden übrigen, nicht aktivierten Randrasterfelder entgegen der gewählten Navigationsrichtung bewegt oder aus der Monitordarstellung herausgeführt werden, wobei während des Navigierens mittels der Rasterfelder (6a-e) und der Bewegung der vorhandenen Dateien für das Zentrums-Rasterfeld (7) und der nicht navigationsseitig aktivierten Randrasterfelder das Nachladen der angrenzenden Dateiinhalte erfolgt, so daß der Darstellungsvorgang beschleunigbar ist.

2. Verfahren nach Anspruch 1,
**dadurch gekennzeichnet,daß**
das Zentrums-Rasterfeld (7) mit einer Zoomfunktion belegt ist.

3. Verfahren nach Anspruch 1 oder 2,
**dadurch gekennzeichnet,**
**daß** die in Navigationsrichtung den aktivierten Randrasterfeldern nächstliegenden Felder aus der Hauptdatei nachgeladen werden.

4. Verfahren nach Anspruch 3,
**dadurch gekennzeichnet,**
**daß** bei den nachzuladenden Dateien zunächst diejenige nachgeladen wird, welche bei kartesischer Betrachtung unmittelbar benachbart in Navigationsrichtung liegt.

5. Verfahren nach einem der vorangegangenen Ansprüche,
**dadurch gekennzeichnet,**
**daß** den Randrasterfeldern (6a-e) eine Navigationsrichtungsdarstellung als Grafiksymbol überlagert wird, welche zum Aktivieren z.B. mittels einer Computermaus anklickbar ist.

6. Verfahren nach einem der Ansprüche 1 bis 5 mit folgenden automatisierbaren Schritten zur Kompression von Dateien, enthaltend Text und Grafik- oder Bildinformationen:
- in an sich bekannter Weise erfolgende Erstellung von vektorisiertem Dateiausgangsmaterial in Ebenen getrennt nach Text und Grafik- oder Bildinformationen unter Verwendung einer maximalen 4-Bit-Farbtiefe aufweisenden Anzahl von Grundfarben;
- getrennte Farbreduktion für Text und Grafik- oder Bildinformation, wobei für Texte auf mindestens fünf Graustufen zurückgegriffen und die verbleibende Farbtiefe für die Grafik- oder Bildinformation genutzt wird und
- Zusammenfügen der getrennt farbreduzierten Dateien.

7. Verfahren nach Anspruch 6,
**dadurch gekennzeichnet,**
**daß** bei der Vektorisierung auf 16 Grundfarben zurückgegriffen wird, wobei fünf bis sechs Graustufen für die Textinformationen bzw. Dateien und zehn bis elf Farben für die Grafik- und Bildinformationen bzw. Dateien zur Verfügung stehen.

8. Verfahren nach Anspruch 6 oder 7,
**dadurch gekennzeichnet,**
**daß** in die zusammengefügten farbreduzierten Dateien Rasterlinien eingefügt und Unterdateien im Rasterformat erzeugt werden.

9. Verfahren nach einem der Ansprüche 1 bis 8 zur Verwendung für die Darstellung von Karten, Stadtplänen und Wegweisern mit Navigationsmöglichkeit.

## Claims

1. A method of displaying and navigating in large data files containing graphic elements, the respective file sections being displayed on a monitor and the display area being divided up visually and on the driving side, said method being **characterized by** the following steps:
- dividing the display area (1) of the monitor into a preferably Cartesian raster (2) comprising a central raster field (7) and edge raster fields (6a-e) surrounding the same, and loading the files required for the initial display from a master file;
- allocating navigation means and reload commands to each of said edge raster fields (6a-e) so that upon activation of any of said edge raster fields (6a-e) the file content representing said field will become the central raster field (7), and the file content that was not displayed so far and adjoins the edge raster field or edge raster fields (6a-e) may be reloaded from the master file, and furthermore the remaining non-activated edge raster fields adjoining the previous central raster field are either moved in opposition to the selected navigation direction or removed from the monitor display, wherein during navigation by means of the raster fields (6a-e) and movement of the existing files for the central raster field (7) and the non-navigation-side activated edge raster fields the adjoining file contents are reloaded so that the process of displaying may be accelerated.

2. Method as claimed in claim 1, **characterized in that** the central raster field (7) is provided with a zoom function.

3. Method as claimed in claim 1 or claim 2, **characterized in that** those fields which are closest to the activated edge raster fields in the navigation direction are reloaded from the master file.

4. Method as claimed in claim 3, **characterized in that** from among the files to be reloaded, initially that one will be reloaded which - as viewed in a Cartesian sense - is immediately adjoining in the navigation direction.

5. Method as claimed in any one of the preceding claims, **characterized in that** a navigation direction display in the form of a graphic symbol is superposed on the edge raster fields (6a-e), said display adapted to be clicked, for instance, by a computer mouse for activation of said display.

6. Method as claimed in any one of the claims 1 to 5, comprising the following automatizable steps for compressing files that include text and graphic or pictorial information:
- establishing - in a manner known per se - vectorized file output material in levels separated as to text and graphic or pictorial information by making use of a maximum number of primary colours with a 4-bit depth of colour;
- separate colour reduction for text and graphic or pictorial information, wherein at least five gray levels are used for text and the remaining colour depth is used for graphic or pictorial information, and
- combining the separately colour-reduced files.

7. Method as claimed in claim 6, **characterized in that** for vectorizing, reference is made to 16 primary colours, wherein five to six gray levels are available for text information or files, respectively, while ten to eleven colours are available for the graphic and pictorial information or files, respectively.

8. Method as claimed in claim 6 or claim 7, **characterized in that** grid lines are incorporated in said colour-reduced combined files, and subfiles having raster format are created.

9. Method as claimed in any one of the claims 1 to 8 for use in displaying maps, city maps and signposts with navigation function.

## Revendications

1. Procédé pour représenter et naviguer dans de très grands fichiers contenant des éléments graphiques, la représentation des extraits de fichier respectifs ayant lieu sur un moniteur ainsi qu'une répartition visuelle de la surface de représentation, **caractérisé par** les opérations suivantes :
- une répartition de la surface de représentation (1) du moniteur selon une trame (2) de préférence de type cartésienne, présentant un champ de trame central (7) ainsi que des champs de trame (6a-e) entourant celui-ci, et le chargement des fichiers nécessaires pour la première représentation de fichiers nécessaires à pertir d'un fichier principal;
- l'affectation de directions de navigation et d'ordres de rechargement à chacun des champs de trame périphériques (6a-e), de sorte que par l'activation d'un des champs de trame périphériques (6a-e) le contenu de fichier représentant ce champ devienne le champ de trame central (7), ainsi que le contenu de fichier limitrophe du champ de trame périphérique ou des champs de trame périphériques (6a-e) du fichier principal puisse être rechargé à partir du fichier principal et de plus que les autres champs de trame périphériques non activés limitrophes du champ de trame central précédent puissent être déplacés ou sortis de la représentation sur moniteur contrairement à la direction de navigation choisie, le rechargement des contenus de fichiers limitrophes ayant lieu pendant la navigation au moyen des champs de trame (6a-e) et du déplacement des fichiers existants pour le champ de trame central (7) et des champs de trame périphériques non activés du côté de la navigation, de sorte que le processus de représentation puisse être accéléré.

2. Procédé selon la revendication 1,
**caractérisé en ce que**
le champ de trame central (7) est garni d'une fonction de zoom.

3. Procédé selon la revendication 1 ou 2,
**caractérisé en ce que**
les champs les plus proches des champs de trame périphériques activés dans la direction de navigation sont rechargés du fichier principal.

4. Procédé selon la revendication 3,
**caractérisé en ce que**
parmi les fichiers à recharger celui qui se trouve directement voisin, considéré de façon cartésienne, dans la direction de navigation est rechargé en premier.

5. Procédé selon l'une quelconque des revendications précédentes,
**caractérisé en ce que**
les champs de trame périphériques (6a-e) sont superposés par une représentation de direction de navigation comme symbole graphique qui puisse être cliqué par exemple au moyen d'une souris d'ordinateur pour son activation.

6. Procédé selon l'une quelconque des revendications 1 à 5, comprenant des opérations susceptibles d'automatisation suivantes pour la compression des fichiers, contenant texte et informations d'image ou graphiques :
- de manière connue en soi l'établissement ayant lieu de matière première de fichier vectorisée dans des plans selon le texte ou des informations d'image ou graphiques au moyen d'un nombre de couleurs de base présentant une profondeur de couleur de 4 bits au maximum;
- l'utilisation d'une réduction de couleurs séparée d'informations de texte, d'image ou de graphisme, auquel cas pour des textes au moins cinq niveaux de gris et la profondeur de couleurs restante pour l'information d'image ou graphique et
- la jonction des fichiers à réduction de couleurs séparés.

7. Procédé selon la revendication 6,
**caractérisé en ce que**,
lors de la vectorisation on a recours à 16 couleurs de base, auquel cas il resterait cinq à six niveaux de gris pour les informations de texte
respectivement fichiers et dix à onze couleurs pour les informations d'image respectivement les fichiers sont disponibles.

8. Procédé selon la revendication 6 ou 7,
**caractérisé en ce que** dans les fichiers à réduction de couleurs des lignes de trame sont
insérées et des sous-fichiers sont générés dans le format de trame.

9. Procédé selon l'une quelconque des revendications 1 à 8 pour l'utilisation pour la représentation de cartes, de plans de villes et de guides avec une possibilité de navigation.
